# EUROPÄISCHE PATENTSCHRIFT

(11) **EP 0 516 580 B1**
(45) Veröffentlichungstag und Bekanntmachung des Hinweises auf die Patenterteilung: **22.03.1995**
(21) Anmeldenummer: 92810282.1
(22) Anmeldetag: 16.04.1992
(51) Int. Cl.: F17C 5/06, B60S 5/02, F02B 43/00

(54) **Einrichtung zum Betanken eines Gasbrennstoffbehälters**
Filling device for a gaseous fuel tank
Dispositif de ravitaillement d'un réservoir à combustible gazeux

(30) Priorität: 30.05.1991 CH 1593/91
(43) Veröffentlichungstag der Anmeldung: 02.12.1992
(73) Patentinhaber: Maschinenfabrik Sulzer-Burckhardt AG, CH-4002 Basel (CH)
(72) Erfinder: Baumann, Heinz, CH-8400 Winterthur (CH); Mutter, Heinz, CH-8400 Winterthur (CH)
(74) Vertreter: Trieblnig, Adolf

(56) Entgegenhaltungen:
- EP-A- 0 356 377
- CH-A- 676 951

## Beschreibung

Die Erfindung betrifft eine Einrichtung zum Betanken eines Gasbrennstoffbehälters, mit einem über einen elektrischen Motor antreibbaren Kompressor, dessen Saugseite über eine mit einem Einlassventil versehene Saugleitung an eine Quelle des Gasbrennstoffs, insbesondere eine Erdgasleitung, anschliessbar ist und dessen Druckseite an eine mit dem zu betankenden Gasbrennstoffbehälter kuppelbare Speiseleitung anschliessbar ist und über Steuer- und Ueberwachungselemente, welche ein in einem Druckraum eines Druckbehälters angeordnetes Entlastungsventil und ein auf einen vorbestimmten Oeffnungsdruck einstellbares Sicherheitsventil enthalten, mit einer aus dem Druckbehälter wegführenden Abströmleitung in Verbindung steht.

Bei einer aus der EP-Patentanmeldung 0 300 222 bekannten Einrichtung der genannten Art, mit einem Kompressor, dessen Fülldruck über eine Steuereinrichtung in Abhängigkeit von der Umgebungstemperatur beeinflussbar ist, sind der Kompressor und der Motor neben dem Druckbehälter angeordnet, welcher durch eine Zwischenwand in einen mit der Druckseite des Kompressors verbundenen Armaturenraum und einen mit der Saugseite des Kompressors verbundenen Pufferraum unterteilt ist. Der Armaturenraum enthält das Einlassventil, das Entlastungsventil, ein Druckbegrenzungsventil und weitere Armaturen, wobei das Einlassventil und das Entlastungsventil durch ein gemeinsames Umschaltorgan gebildet sein können. Der Pufferraum ist über in der Zwischenwand ausgebildete Verbindungskanäle mit den Austrittsseiten des Einlassventils und des Entlastungsventils verbunden und über ein auf einen relativ niederen Oeffnungsdruck, z.B. 2 bis 3 bar, einstellbares Sicherheitsventil mit dem Armaturenraum verbindbar, an den die Abströmleitung anschliesst. Beim Erreichen eines vorbestimmten, der Umgebungstemperatur angepassten Fülldrucks, der z.B. 100 bis 200 bar betragen kann, wird bei der bekannten Einrichtung über die Steuereinrichtung der Motor des Kompressors abgeschaltet und das Entlastungsventil geöffnet, wobei die im Kompressor und in der Speiseleitung verbliebene, verdichtete Gasbrennstoffmenge in den Pufferraum, und beim Ueberschreiten des durch das Sicherheitsventil begrenzten Drucks, in den Armaturenraum geführt und aus diesem, durch eine Drosselstelle verzögert, über die Abströmleitung abgeführt wird. In entsprechender Weise wird auch bei einem Ueberschreiten eines am Druckbegrenzungsventil eingestellten Höchstwertes des Fülldrucks die in den Armaturenraum austretende Gasmenge über die Abströmleitung abgeführt.

Die bekannte Einrichtung erfordert einen relativ grossen Platzbedarf für die nebeneinander anzuordnenden und miteinander zu verbindenden Aggregate und eine konstruktiv relativ aufwendige Ausführung des zwei druckdichte, explosionsfeste Behälterteile aufweisenden Druckbehälters mit der als Verbindungsteil, insbesondere als Verteilblock ausgebildeten Zwischenwand.

Der Erfindung liegt die Aufgabe zugrunde, eine insbesondere in dieser Hinsicht weiter entwickelte Betankungseinrichtung der eingangs genannten Art in einer kompakten Ausführung zu schaffen, in welcher der Kompressor, der Motor, der Druckbehälter und die erforderlichen Steuerungs- und Ueberwachungselemente zu einer mit geringem Aufwand als Ganzes transportierbaren und einfach installierbaren Baueinheit zusammengefasst sind und welche mit einem vereinfachten Druckbehälter mindestens die gleiche Betriebssicherheit wie die bekannte Einrichtung gewährleistet.

Diese Aufgabe wird erfindungsgemäss dadurch gelöst, dass die Saugseite des Kompressors und die Saugleitung an den das Entlastungsventil und das Sicherheitsventil enthaltenden Druckraum des Druckbehälters angeschlossen sind, dass die Abströmleitung über das Sicherheitsventil an diesen Druckraum angeschlossen ist, und dass ein Teil des Druckbehälters als Tragteil für eine an diesem anbringbare Gehäusepartie des Kompressors ausgebildet ist.

Durch die erfindungsgemässe Ausführung ist eine raumsparende Anordnung des Kompressors und des Druckbehälters erzielbar, welche wenige, kurze Verbindungsleitungen erfordert. Ferner ist eine einfachere Bauweise des Druckbehälters erzielbar, der lediglich einen einzigen, gegen die Umgebung abzudichtenden Druckraum aufweist und der zugleich als tragende Halterung für den Kompressor dient. Die erfindungsgemässe Anordnung ermöglicht insbesondere eine Ausführung mit einer im Vergleich zu bisherigen Einrichtungen verringerten Anzahl äusserer, gegen die Umgebung abzudichtender Dichtstellen, so dass eine entsprechend grössere Betriebssicherheit gewährleistet wird. Im Falle einer Leckage an den im einzigen Druckraum angeordneten Steuer- und Ueberwachungselementen sowie beim Ansprechen des Entlastungsventils oder eines entsprechenden Sicherheitselementes wird der ausströmende Gasbrennstoff im Druckraum zurückgehalten, durch den Kompressor angesaugt und erst beim Ueberschreiten des am Sicherheitsventil eingestellten Oeffnungsdrucks in die Abströmleitung abgeleitet. Durch entsprechende Bemessung des Druckbehälters und geeignete Einstellung des Oeffnungsdrucks des Sicherheitsventils lässt sich somit sicherstellen, dass bei normalem Betrieb kein Gasbrennstoff in die Umgebung abströmt.

Ausgestaltungen des Erfindungsgegenstandes sind in den abhängigen Patentansprüchen angegeben.

Die Ausführung nach Anspruch 2 ermöglicht eine kompakte Bauweise der Einrichtung, wobei sich vorteilhafterweise eine Dichtungsanordnung für die rotierende Antriebswelle erübrigt. Diese Ausführung ermöglicht insbesondere auch eine einfache Montage und Demontage der Einrichtung, mit baukastenartig zusammensetzbaren Bauteilen, wobei der Rotor des Motors mit der Antriebswelle des Kompressors lösbar kuppelbar oder, gemäss Anspruch 3, fest verbunden sein kann.

Entsprechend der Ausführung nach Anspruch 3 kann der die Steuer- und Ueberwachungselemente enthaltende Druckbehälter zugleich als Einbauraum für den Motor genutzt werden, wodurch die Aussenabmessungen der Einrichtung entsprechend reduziert werden können. Dabei kann insbesondere der Rotor des Motors auf einfache Weise, durch Aufsetzen des Kompressors auf den Tragteil des Druckbehälters, in den Stator eingeführt werden.

Die Ausführung nach Anspruch 4 ermöglicht eine für Wartung und Inspektion leicht zugängliche Anordnung der Steuereinrichtung und der auf engem Raum konzentrierbaren Leitungsanschlüsse, wobei der nichttragende Teil des Druckbehälters in einer von Anschlüssen freien, leichten Bauweise ausgeführt sein kann, die im wesentlichen durch einen vorgegebenen maximalen Innendruck des Druckbehälters bestimmt ist. Der Druckbehälter kann zur Aufnahme aller oder nur eines Teils der Steuer- und Ueberwachungselemente ausgelegt sein.

Als Tragteil kann eine Bodenpartie oder, gemäss Anspruch 5, ein Deckel des Druckgefässes ausgebildet sein. Die Ausführung nach Anspruch 5 ermöglicht eine insbesondere hinsichtlich Kühlung und Lärmschutz optimale Anordnung, bei der alle Teile der Einrichtung leicht zugänglich sind.

Weitere Einzelheiten und Merkmale der Erfindung ergeben sich aus der folgenden Beschreibung eines in der Zeichnung schematisch dargestellten Ausführungsbeispiels der Erfindung in Verbindung mit den Ansprüchen. In der Zeichnung zeigen:
- Fig. 1: ein Schema einer erfindungsgemäss ausgebildeten Betankungseinrichtung;
- Fig. 2: eine entsprechende Betankungseinrichtung in einem Längsschnitt entsprechend der Linie II-II in Fig. 3;
- Fig. 2a: eine Einzelheit einer Betankungseinrichtung in einer abgewandelten Ausführungsform, in einer Teilansicht mit Teilschnitt entsprechend der Darstellung nach Fig. 2;
- Fig. 3: die Betankungseinrichtung in einem Horizontalschnitt entsprechend der Linie III-III in Fig. 2;
- Fig. 4: einen Vertikalschnitt entsprechend der Linie IV-IV in Fig. 3;
- Fig. 5: einen Horizontalschnitt entsprechend der Linie V-V in Fig. 4.

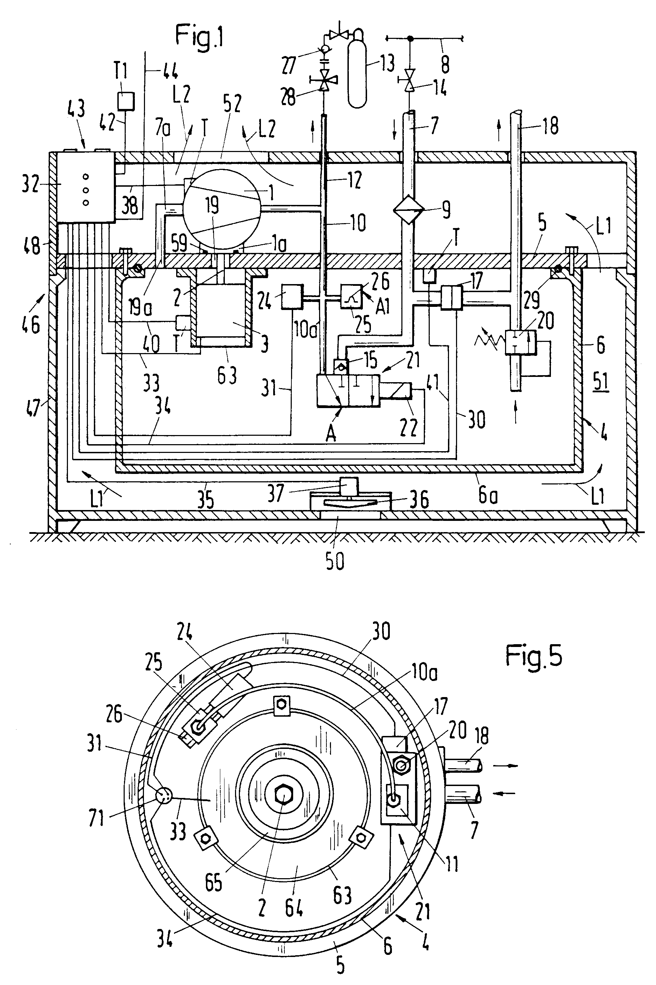

Die Betankungseinrichtung nach Fig. 1 enthält einen kompressor 1 mit einer Antriebswelle 2, die mit einem elektrischen Motor 3 gekuppelt ist. Der Motor 3 ist in einem Druckbehälter 4 angeordnet, der einen Deckel 5 und einen an diesem über eine Dichtungsanordnung 29 befestigbaren Wandteil 6 mit einer Bodenpartie 6a aufweist. Der kompressor 1, der in beliebiger Bauart ausgeführt sein kann, ist mit einer Gehäusepartie 1a dichtend auf dem Deckel 5 angebracht und saugseitig an den Druckbehälter 4 angeschlossen, der über eine Saugleitung 7 an eine Quelle eines Gasbrennstoffs, beim dargestellten Beispiel eine Erdgasleitung 8, anschliessbar ist. Darstellungsgemäss kann der saugseitige Anschluss des Kompressors 1 durch ein Ansaugstück 7a gebildet sein, das mit einer im Deckel 5 vorgesehenen Durchtrittsöffnung 19a dichtend verbunden ist. Die Druckseite des Kompressors 1 ist einerseits über eine Entlastungsleitung 10 mit einem im Druckbehälter 4 angeordneten Umschaltorgan 21 verbunden, welches in einer Schaltstellung als Entlastungsventil wirkt, und andererseits über eine Speiseleitung 12 an einen zu betankenden Gasbrennstoffbehälter 13 anschliessbar, der beim dargestellten Beispiel als Treibstofftank eines nicht dargestellten Fahrzeuges ausgebildet sein kann.

Die Saugleitung 7, die dargestellungsgemäss ein z.B. von Hand betätigbares Absperrorgan 14 und ein Filter 9 zum Abscheiden von im Erdgas gegebenenfalls enthaltenen Verunreinigungen enthalten kann, ist über ein Rückschlagventil 15 ebenfalls mit dem Umschaltorgan 21 verbunden, welches in einer anderen Schaltstellung als Einlassventil wirkt. Zur Ueberwachung des Eingangsdruckes des Gasbrennstoffs ist ein auf einen vorbestimmten Minimaldruck in der Saugleitung 7 fest einstellbarer Differenzdruckschalter 17 vorgesehen, dessen erster Eingang mit der Saugleitung 7, und dessen zweiter Eingang mit einer aus dem Druckbehälter 4 wegführenden Abströmleitung 18 verbunden ist, welche stromaufwärts des Differenzdruckschalters 17 mit einem auf einen vorbestimmten Oeffnungsdruck einstellbaren Sicherheitsventil 20 versehen ist. Die Abströmleitung 18 ist aus der unmittelbaren Umgebung der Betankungseinrichtung, z.B. über ein die Einrichtung überdeckendes Dach hinaus, weggeführt.

Das Rückschlagventil 15 kann in das Umschaltorgan 21, darstellungsgemäss ein 3/2-Wegeventil, integriert sein, welches einen an die Saugleitung 7 anschliessbaren ersten Eingang, einen an die Entlastungsleitung 10 anschliessbaren zweiten Eingang und einen in den Innenraum des Druckbehälters 4 mündenden Ausgang A aufweist. Das Umschaltorgan 21 ist über ein Stellglied 22, z.B. einen Stellmotor oder, gemäss Fig. 1, einen Elektromagneten, zwischen einer Einlasstellung, in der die Saugleitung 7 mit dem Ausgang A verbunden und die Entlastungsleitung 10 abgesperrt ist, und einer in der Fig. 1 dargestellten Entlastungsstellung verstellbar, in der die Entlastungsleitung 10 mit dem Ausgang A verbunden und die Saugleitung 7 abgesperrt ist. Ein entsprechendes Umschaltorgan, welches nicht Gegenstand der vorliegenden Erfindung ist, ist z.B. aus der CH-PS 675 459 (P.6364) bekannt.

Die Entlastungsleitung 10 ist innerhalb des Druckbehälters mit einem Hochdruckfühler 24 und einem auf einen vorbestimmten Maximaldruck des verdichteten Gasbrennstoffes einstellbaren Druckbegrenzungsventil 25 versehen, welches, wie in Fig. 1 angedeutet, einen in den Innenraum des Druckbehälters 4 mündenden, durch eine Berstscheibe 26 verschlossenen Ausgang A1 aufweisen kann. Die Speiseleitung 12 ist mit Absperrmitteln versehen, die darstellungsgemäss unter anderem ein z.B. von Hand betätigbares Absperrorgan 28 und/oder eine Kompressorseitig absperrende Kupplung enthalten können. Ein Rückschlagventil 27 verhindert das Zurückströmen des Gasbrennstoffs in die Speiseleitung 12.

Der Differenzdruckschalter 17 und der Hochdruckfühler 24 sind über elektrische Signalleitungen 30 bzw. 31 an eine Steuereinrichtung 32 angeschlossen, welche über eine Steuerleitung 34 mit dem Stellglied 22 des Umschaltorgans 21, und über weitere elektrische Leitungen 33 und 35 mit dem Motor 3 bzw. einem Motor 37 eines beim dargestellten Beispiel ausserhalb des Druckbehälters 4 angeordneten Gebläses 36 verbunden ist. Der Kompressor 1, der Motor 3 und der Deckel 5 sind mit Temperaturfühlern T versehen, welche je über eine Signalleitung 38 bzw. 40 bzw. 41 mit der Steuereinrichtung 32 in Verbindung stehen. Die Steuereinrichtung 32 ist ferner über eine Signalleitung 42 an einen die Umgebungstemperatur erfassenden Temperaturfühler T1 angeschlossen und ist darstellungsgemäss in einer Schalteinheit 43 untergebracht, welche über eine Stromleitung 44 an eine nicht dargestellte Stromquelle anschliessbar ist.

Die Schalteinheit 43 kann darstellungsgemäss ausserhalb des Druckbehälters 4, in einem zur Luftführung dienenden Gehäuse 46 angeordnet sein, welches einen den Wandteil 6 und die Bodenpartie 6a umgebenden Unterteil 47 und einen den Deckel 5 und den Kompressor 1 umgebenden Oberteil 48 aufweist. Der Unterteil 47 ist in seiner Bodenpartie mit einer Eintrittsöffnung 50 versehen, der das Gebläse 36 zugeordnet ist. Durch das Gebläse 36 wird Kühlluft in das Gehäuse 46 angesaugt, durch einen zwischen dem Wandteil 6 und der Seitenwand des Gehäuses 46 gebildeten Ringraum 51 gegen den Kompressor 1 geführt und durch eine im Oberteil 48 vorgesehene Austrittsöffnung 52 aus dem Gehäuse 46 abgeführt.

Die Betankungseinrichtung wird über die z.B. durch einen Schlüssel betätigbare Schalteinheit 43 in Betrieb gesetzt, wobei in bekannter Weise, wie z.B. in der eingangs genannten EP-Patentanmeldung 0 300 222 beschrieben, über die Steuereinrichtung 32 das Umschaltorgan 21 aus der dargestellten Schaltstellung in die der Saugleitung 7 zugeordnete Durchflussstellung verstellt und der Motor 3 gestartet wird. Entsprechend wird das aus der Erdgasleitung 8 mit einem Druck von z.B. 20 mbar zugeführte Erdgas durch den Kompressor 1 auf einen vorbestimmten Fülldruck verdichtet und über die Speiseleitung 12 dem Gasbrennstoffbehälter 13 zugeführt, wobei der betriebsmässige Fülldruck über die Steuereinrichtung 32 in Abhängigkeit von Steuersignalen des Temperaturfühlers T1 und des Hochdruckfühlers 24 auf einen der jeweiligen Umgebungstemperatur entsprechenden Wert begrenzt wird. Durch das Druckbegrenzungsventil 25 ist ein Höchstwert des Fülldrucks einstellbar, der z.B. 230 bar betragen kann.

Bei der dargestellten Ausführung wird der aus der Saugleitung 7 zugeführte Gasbrennstoff durch den Ausgang A des Umschaltorgans 21 in den die Armaturen und den Motor 3 enthaltenden Druckbehälter 4 geführt und aus diesem durch den Kompressor 1 angesaugt. Beim Erreichen des der Umgebungstemperatur entsprechenden Fülldrucks von z.B. 100 bar bis 200 bar wird über die Steuereinrichtung 32 das Umschaltorgan 21 in die dargestellte, der Entlastungsleitung 10 zugeordnete Durchflussstellung verstellt und der Motor 3 abgeschaltet. Entsprechend wird der im Kompressor 1 und in der Speiseleitung 12 verbliebene, verdichtete Gasbrennstoff durch den Ausgang A des Umschaltorgans 21 in den Druckbehälter 4 entspannt. In diesem Fall - oder wenn beim Ueberschreiten des am Druckbegrenzungsventil 25 eingestellten Höchstwerts des Fülldrucks die Berstscheibe 26 zerstört wird und der verdichtete Gasbrennstoff durch den Ausgang A1 in den Druckbehälter 4 austritt - wird in diesem ein durch das Sicherheitsventil 20 begrenzter Druck von z.B. 2 bis 3 bar aufgebaut. Beim Ueberschreiten dieses Drucks wird das Sicherheitsventil 20 geöffnet und eine entsprechende Menge des Gasbrennstoffs durch die mit einem relativ grossen Durchmesser ausführbare Abströmleitung 18, welche einen raschen Druckabbau gewährleistet, ins Freie abgeleitet.

Bei der beschriebenen Ausführung kann der Druckbehälter 4 für einen relativ geringen Innendruck ausgelegt werden, der nicht wesentlich höher ist als der am Sicherheitsventil 20 eingestellte Oeffnungsdruck. Entsprechend kann der Druckbehälter 4 in einer relativ leichten, einfachen Bauweise ausgeführt werden, die insbesondere relativ wenige, leicht abzudichtende Strömungsdurchgänge erfordert.

Wie aus der eingangs genannten EP-Patentanmeldung 0 300 222 hervorgeht, können anstelle des Umschaltorgans 21 auch einzelne, je für sich betätigbare Armaturen - Einlasventil, Entlastungsventil, Rückschlagventil - vorgesehen sein. Ferner können nach einer nicht dargestellten Ausführungsform die Niederdruckarmaturen - z.B. das Rückschlagventil 15, ein Einlassventil und der Differenzdruckschalter - ausserhalb des Druckbehälters 4 angeordnet sein, der dann nur die den höchsten Drücken ausgesetzten Armaturen - ein Entlastungsventil und das Druckbegrenzungsventil 25 - sowie das Sicherheitsventil 20 enthält.

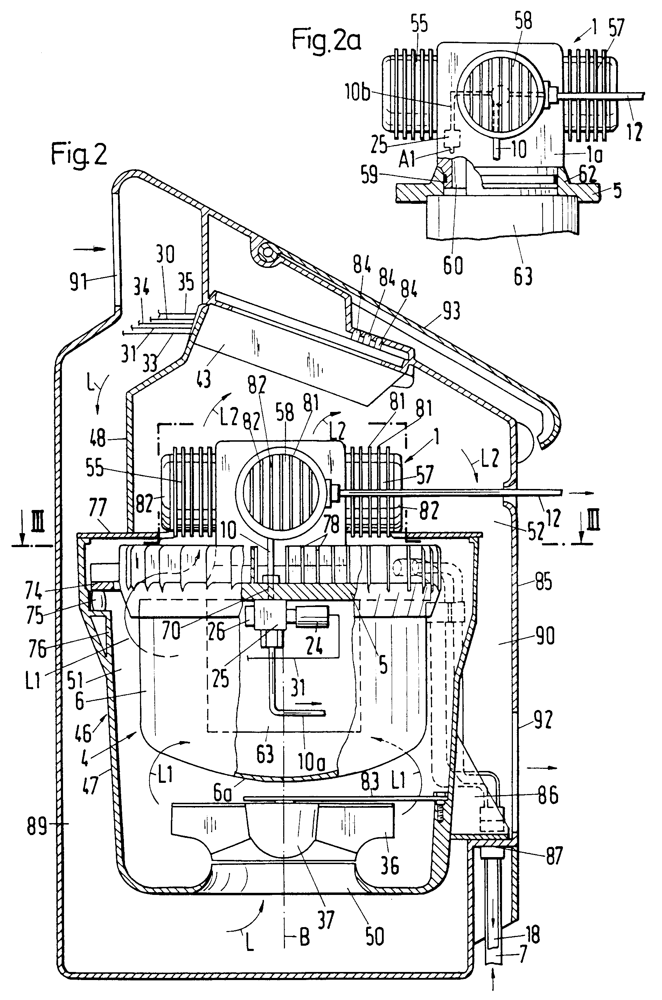

Der Kompressor kann als zwei- oder mehrstufiger, entsprechend der gegenständlichen Darstellung der Betankungseinrichtung nach den Fig. 2 bis 5 als vierstufiger kolbenkompressor ausgeführt sein, der zwei auf einer gemeinsamen horizontalen Achse 53 eineinander gegenüberliegend angeordnete Zylinder 55 und 57 sowie zwei gegenüber diesen um 90° versetzt auf einer gemeinsamen horizontalen Achse 54 eineinander gegenüberliegend angeordnete Zylinder 56 und 58 aufweist, in denen nicht dargestellte Kolben geführt sind. Jedes der auf der gleichen Achse 53 bzw. 54 angeordneten kolbenpaare kann in bekannter Weise über eine ihre kolbenstangen verbindende Antriebsanordnung mit der einen zentralen Kurbelraum 60 durchsetzenden, als Kurbelwelle ausgebildeten vertikalen Antriebswelle 2 gekuppelt sein, wobei in den Zylindern 55 und 56 die erste bzw. die zweite Verdichtungsstufe, und in den Zylindern 57 und 58 die dritte bzw. die vierte Verdichtungsstufe ausgebildet sein können. Ein entsprechender Kompressor, dessen Ausführung nicht Gegenstand der vorliegenden Erfindung ist, ist z.B. aus der EP-Patentanmeldung 0 389 414 (P.6254) bekannt. Das mit einem Druck von z.B. 20 mbar in den Kurbelraum 60 eingeführte Erdgas kann, z.B. durch eine im Kolben vorgesehene Ansaugöffnung, in den Zylinder 55 angesaugt, auf einen Druck von z.B. 5 bar verdichtet und nacheinander im Zylinder 56 auf einen Druck von z.B. 20 bar, im Zylinder 57 auf einen Druck von z.B. 60 bar und im Zylinder 58 auf einen Enddruck von z.B. 200 bar verdichtet und über die Speiseleitung 12 dem Gasbrennstoffbehälter 13 zugeführt werden.

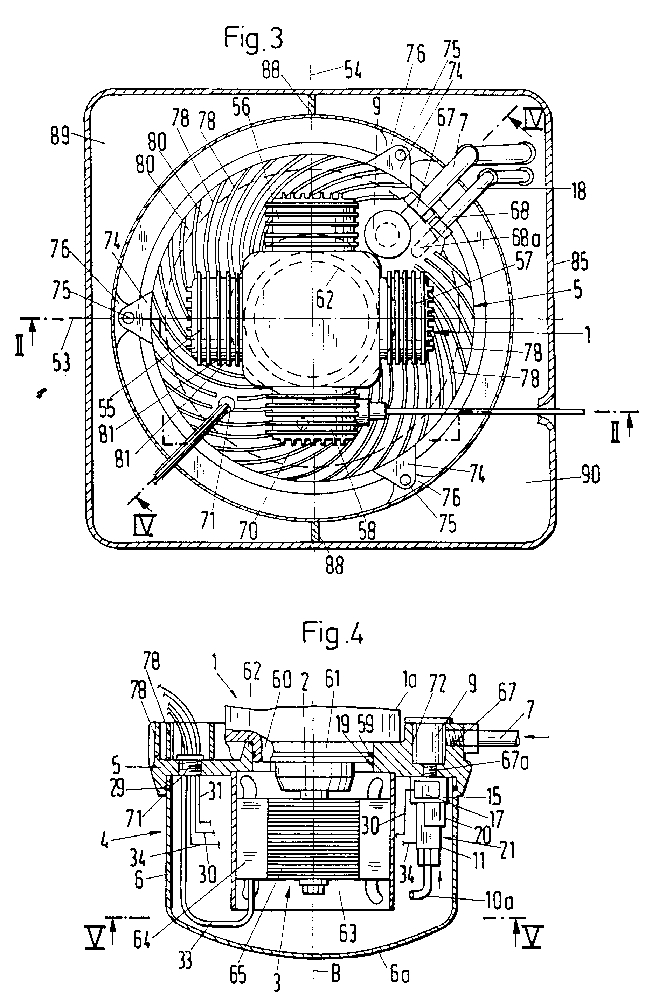

Wie insbesondere aus der Fig. 4 hervorgeht, ist der kompressor 1 mit einer auf den Deckel 5 des Druckbehälters 4 aufsetzbaren, gegen dessen Innenraum offenen Gehäusepartie 1a ausgeführt, welche einen in die Durchtrittsöffnung 19 des Deckels 5 einführbaren zylindrischen Absatz 61 aufweist. Der Deckel 5 des bei der dargestellten Ausführung zylindrischen Druckbehälters 4 ist mit einer die Durchtrittsöffnung 19 umgebenden, zentralen Kragenpartie 62 ausgeführt, durch welche die Gehäusepartie 1a gestützt und der Absatz 61 über eine Dichtungsanordnung 59 dichtend geführt ist. In einer am Deckel 5 befestigten Halterung 63 ist der Motor 3 mit vertikaler Drehachse angeordnet. Der Motor 3 enthält einen an der Halterung 63 befestigbaren Statorteil 64 und einen Rotor 65, welcher mit der Antriebswelle 2 des Kompressor 1 über eine lösbare Kupplung verbunden sein kann oder welcher, wie in Fig. 4 angedeutet, mit der Antriebswelle 2 zu einer durch die Durchtrittsöffnung 19 in den Statorteil 63 einführbaren Einbaueinheit verbunden ist. Gemäss Fig. 4 kann der Rotor 65 mit dem Kompressor 1 zusammengebaut und durch Aufsetzen und Einführen der Gehäusepartie 1a auf bzw. in die Kragenpartie 62 auf einfache Weise eingebaut und durch Abheben des Kompressors 1 entsprechend leicht ausgebaut werden.

In dem zwischen der Halterung 63 und dem Wandteil 6 des Druckbehälters 4 gebildeten Ringraum sind der Differenzdruckschalter 17, das Sicherheitsventil 20, das Umschaltorgan 21, der Hochdruckfühler 24 und das Druckbegrenzungsventil 25 angeordnet. Im Deckel 5 sind Anschlüsse 67 und 68 für die Saugleitung 7 bzw. die Abströmleitung 18 sowie Anschlüsse 70 und 71 für die Entlastungsleitung 10 bzw. die elektrischen Leitungen 30, 31, 33, 34 und 35 vorgesehen. Der Anschluss 67 mündet in eine im Deckel 5 ausgebildete Bohrung 72, welche zur Aufnahme des Filters 9 dient und welche über einen Anschluss 67a mit dem Rückschlagventil 15 des Umschaltorgans 21 in Verbindung steht. Ueber einen entsprechenden Anschluss 68a steht der Anschluss 68 in nicht weiter dargestellter Weise mit dem Differenzdruckschalter 17 und dem Sicherheitsventil 20 in Verbindung. Der Differenzdruckschalter 17 und das Sicherheitsventil 20 können darstellungsgemäss mit dem am Deckel 5 befestigbaren Umschaltorgan 21 zu einer Einbaueinheit verbunden sein. Die am Zylinder 58 angeschlossene Entlastungsleitung 10 ist über den Anschluss 70 mit dem Druckbegrenzungsventil 25 verbunden, welches mit dem Hochdruckfühler 24 zu einer am Deckel 5 befestigbaren Einbaueinheit zusammengefasst und über einen Leitungsabschnitt 10a mit dem Eingang des Umschaltorgans 21 verbunden ist.

Nach einer anderen, in der Fig. 2a teilweise dargestellten Ausführungsform kann das Druckbegrenzungsventil 25 auch ausserhalb des Druckbehälters 4, innerhalb des mit diesem dichtend verbundenen Kompressorgehäuses, angeordnet und an einen Kanal 10b angeschlossen sein, der die Druckseite des Kompressors 1 mit dessen Saugseite verbindet. Bei dieser Ausführung, die mit Ausnahme der Anordnung des Druckbegrenzungsventils 25 der Ausführung nach den Fig. 2 bis 5 entspricht, ist der Kanal 10b mit dem Druckraum des Zylinders 58 verbunden und durch das Druckbegrenzungsventil 25 abgeschlossen, dessen Ausgang A1 in den gegen den Druckbehälter 4 hin offenen Kurbelraum 60 mündet. Beim Ueberschreiten des am Druckbegrenzungsventil 25 eingestellten Drucks wird der durch den Ausgang A1 austretende verdichtete Gasbrennstoff entsprechend entspannt und erneut durch den Kompressor 1 angesaugt bzw. - beim Ansprechen des in der Fig. 2a nicht dargestellten Sicherheitsventils 20 - über die Abströmleitung 18 abgeführt. Der Druckraum des Zylinders 58 ist ferner in beschriebener Weise über die Entlastungsleitung 10 mit den im Druckbehälter 4 angeordneten, in der Fig. 2a nicht dargestellten Steuer- und Ueberwachungselementen - Hochdruckfühler 24 und Umschaltorgan 21 - sowie über die Speiseleitung 12 mit dem Gasbrennstoffbehälter 13 verbindbar. Durch diese Ausführung kann eine weitere Vereinfachung des Aufbaues der Betankungseinrichtung, insbesondere hinsichtlich der im Druckbehälter 4 vorzusehenden Anschlüsse, erzielt werden.

Entsprechend der Darstellung nach den Fig. 2 und 3 ist der Deckel 5 des Druckbehälters 4 über drei an seinem Umfang verteilt angeordnete Konsolen 74 und Gummilager 75 auf Stützpartien 76 des zur Luftführung dienenden Gehäuses 46 abgestützt. Die Stützpartien 76 sind am Unterteil 47 ausgebildet, welcher den Wandteil 6 und den Deckel 5 in einem relativ geringen radialen Abstand umschliesst und welcher mit einer oberhalb des Deckels 5 angeordneten, den Ringraum 51 und die Randpartie des Deckels 5 überdeckenden Prallplatte 77 verbunden ist. Durch die Prallplatte 77 kann die den Ringraum 51 von unten nach oben durchströmende Kühlluft entlang dem Deckel 5 gegen den Kompressor 1 hin umgelenkt und entlang den Zylindern 55, 56, 57 und 58 nach oben abgeführt werden. Entsprechend kann eine für die Kühlung des Druckbehälters 4 und des Kompressors 1 günstige Führung der Luftströmung erreicht werden.

Der Deckel 5 ist mit Kühlrippen 78 ausgeführt, welche - in der Draufsicht nach Fig. 3 gesehen - vom äusseren Umfang aus spiralartig gekrümmt gegen den Uhrzeigensinn zur kragenpartie 62 hin verlaufen, wobei sie im Deckel 5 von der Prallwand 77 überdeckte und im Bereich der Zylinder 55, 57, 57, 58 nach oben offene Luftführkanäle 80 begrenzen. Entsprechend gelangt die durch das Gebläse 36 in den Ringraum 51 geförderte kühlluft, welche entsprechend den Pfeilen L1 schraubenlinienartig um den Wandteil 6 herum gegen die Prallwand 77 geführt wird, im Umfangsbereich des Deckels 5 in die Kanäle 80 und wird durch diese gegen die Gehäusepartie 1a sowie quer zu den Zylindern 55, 56, 57 und 58, zumindest annähernd in Richtung der Längsachse B des Druckgefässes 4, nach oben abgeführt. Die Zylinder 55, 56, 57 und 58 können mit ringförmigen Kühlrippen 81 und mit über ihre Stirnflächen vertikal verlaufenden kühlrippen 82 versehen sein, welche in vertikaler Richtung durchströmbare Strömungswege begrenzen und damit eine gute Kühlwirkung gewährleisten. Wie insbesondere aus der Fig. 3 hervorgeht, können die kühlrippen 78 des Deckels 5 evolventenförmig gekrümmt verlaufen, wobei die kanäle 80 je eine über ihre Länge im wesentlichen konstante Breite aufweisen können, so dass eine strömungsgünstige Führung der Kühlluft und damit eine wirksame kühlung des Deckels 5 und des Kompressors 1 erzielbar ist. Es ist jedoch auch eine Ausführung möglich, bei der eine ausreichende Kühlung durch einfacher herzustellende, gerade verlaufende, z.B. sternförmig angeordnete kühlrippen erzielbar ist.

Das Gebläse 36 ist über eine Halterung, die drei mit dem Motor 37 verbundene Tragarme 83 enthalten kann, im Unterteil 47 des Gehäuses 46 abgestützt. In einem im Oberteil 48 des Gehäuses 46 vorgesehenen, für Inspektion, Wartung und Bedienung gut zugänglichen Einbaubereich kann die Schalteinheit 43 in Form einer Schalttafel untergebracht sein, welche mit Druckschaltern 84 zur Betätigung der Betankungseinrichtung versehen sein kann. Entsprechend der Darstellung nach den Fig. 2 und 3 kann das den Druckbehälter 4 und den Kompressor 1 umgebende Gehäuse 46 in einem weiteren, äusseren Gehäuse 85 angeordnet sein, welches gemäss Fig. 3 mit quadratischem Querschnitt ausgeführt sein kann. Das innere Gehäuse 46 kann über mehrere, z.B. drei konsolen 86, auf entsprechende Stützpartien 87 des Gehäuses 85 aufgesetzt sein. Das äussere Gehäuse 85 kann mit dem inneren Gehäuse 46 durch Trennwände 88 verbunden sein, welche den zwischen den Gehäusen 85 und 46 gebildeten Raum in zwei nacheinander durchströmbare Teilräume 89 und 90 unterteilen, welche nur über die untere Eintrittsöffnung 50 und die in der Prallwand 77 ausgebildete Oeffnung miteinander in Verbindung stehen. Dabei kann der Teilraum 89 mit einer am oberen Ende des Gehäuses 85 angeordneten Eintrittsöffnung 91, und der Teilraum 90 mit einer am unteren Ende des Gehäuses 85 angeordneten Austrittsöffnung 92 in Verbindung stehen. Das äussere Gehäuse 85 kann ferner mit einem verschliessbaren Deckel 93 versehen sein, durch den die Druckschalter 84 überdeckt und vor unbefugter Betätigung geschützt werden können.

Während des Betriebes wird durch das Gebläse 36 die kühlluft entsprechend den Pfeilen L durch die Eintrittsöffnung 91 und den Teilraum 89 angesaugt, entsprechend den Pfeilen L1 entlang dem Druckbehälter 4 in den Oberteil 48 des inneren Gehäuses 46 geführt und entsprechend den Pfeilen L2 durch den Teilraum 90 und die Austrittsöffnung 92 aus dem Gehäuse 85 hinausgeführt. Ensprechend wird auf engstem Raum eine Kühlluftführung erreicht, welche auch bei der durch die erfindungsgemässe Ausführung erzielbaren kompakten Bauweise der Betankungsanlage eine intensive kühlung sowohl des Druckbehälters 4 als auch des Kompressors 1 ermöglicht. Durch die Gehäuse 46 und 85 kann zugleich ein wirksamer Lärmschutz erzielt werden.

Es sind zahlreiche abgewandelte Ausführungsformen der Erfindung möglich. So kann z.B. der komplette Motor des Kompressors an der Innenseite des als Tragteil ausgebildeten Deckels 5 befestigt und über eine im Bereich der Durchtrittsöffnung 19 angeordnete, bekannte Kupplungsanordnung mit der Antriebswelle des Kompressors verbunden sein. Nach einer anderen Ausführungsform können der kompressor und der Motor innerhalb des Druckbehälters angeordnet sein, wodurch eine weitere Reduktion von Dichtstellen gegen die Umgebung erzielbar ist. Nach einer weiteren Ausführungsform kann der Kompressor innerhalb und der Motor ausserhalb des Druckbehälters angeordnet sein. Ferner kann nach einer Ausführungsform der Motor des kompressors ausserhalb des Druckbehälters, z.B. innerhalb der an der Aussenseite des Deckels 5 oder eines entsprechenden Tragteils befestigten Gehäusepartie des Kompressors angebracht sein, wobei der lediglich für die Aufnahme der Armaturen - gegebenenfalls nur für die den höchsten Drücken ausgesetzten Armaturen - auszulegende Druckbehälter entsprechend klein ausgeführt werden kann. Abweichend von den dargestellten Ausführungen, kann auch ein anderer Teil, z.B. eine Bodenpartie, des Druckbehälters als Tragteil für den Kompressor und/oder den Motor ausgebildet sein. Es ist auch eine Ausführung möglich, bei der etwa im Gehäuse 46, insbesondere an der Prallwand 77, den kühlrippen 78 entsprechende, leitschaufelartige Führungselemente für die kühlluft vorgesehen sind.

## Patentansprüche

1. Einrichtung zum Betanken eines Gasbrennstoffbehälters (13), mit einem über einen elektrischen Motor (3) antreibbaren Kompressor (1), dessen Saugseite über eine mit einem Einlassventil versehene Saugleitung (7) an eine Quelle des Gasbrennstoffs, insbesondere eine Erdgasleitung (8), anschliessbar ist und dessen Druckseite an eine mit dem zu betankenden Gasbrennstoffbehälter (13) kuppelbare Speiseleitung (12) anschliessbar ist und über Steuer- und Ueberwachungselemente, welche ein in einem Druckraum eines Druckbehälters (4) angeordnetes Entlastungsventil und ein auf einen vorbestimmten Oeffnungsdruck einstellbares Sicherheitsventil (20) enthalten, mit einer aus dem Druckbehälter (4) wegführenden Abströmleitung (18) in Verbindung steht, **dadurch gekennzeichnet**, dass die Saugseite des Kompressors (1) und die Saugleitung (7) an den das Entlastungsventil und das Sicherheitsventil (20) enthaltenden Druckraum des Druckbehälters (4) angeschlossen sind, dass die Abströmleitung (18) über das Sicherheitsventil (20) an diesen Druckraum angeschlossen ist, und dass ein Teil des Druckbehälters (4) als Tragteil für eine an diesem anbringbare Gehäusepartie (1a) des Kompressors (1) ausgebildet ist.

2. Einrichtung nach Anspruch 1, dadurch gekennzeichnet, dass der Tragteil des Druckbehälters (4) eine gegen die Gehäusepartie (1a) des Kompressors (1) abdichtbare Durchtrittsöffnung (19) aufweist, und dass der Motor (3) auf der dem Kompressor (1) abgewandten Seite des Tragteils angeordnet und über eine diese Durchtrittsöffnung (19) durchsetzende Antriebswelle (2) mit dem Kompressor (1) kuppelbar ist.

3. Einrichtung nach Anspruch 2, dadurch gekennzeichnet, dass der Kompressor (1) an der Aussenseite des Tragteils des Druckbehälters (4) angeordnet ist, dass der Stator (64) des Motors (3) an der Innenseite dieses Tragteils befestigt ist, und dass der Rotor (65) des Motors (3) mit der Antriebswelle (2) des Kompressors (1) zu einer durch die Durchtrittsöffnung (19) in den Stator (64) einführbaren Einbaueinheit verbunden ist.

4. Einrichtung nach einem der vorangehenden Ansprüche, mit Steuer- und Ueberwachungselementen, welche über elektrische Leitungen (30, 31, 33, 34, 40, 41) mit einer Steuereinrichtung (32) verbunden sind, dadurch gekennzeichnet, dass die Steuereinrichtung (32) ausserhalb des Druckbehälters (4) angeordnet ist, und dass der Tragteil des Druckbehälters (4) mit Anschlüssen (67, 68, 70 und 71) für die Saugleitung (7), die Abströmleitung (18) und eine zum Entlastungsventil führende Entlastungsleitung (10) sowie für die elektrischen Leitungen (30, 31, 33, 34, 40, 41) ausgeführt ist.

5. Einrichtung nach einem der vorangehenden Ansprüche, mit einem im wesentlichen zylindrischen Druckbehälter (4), dadurch gekennzeichnet, dass der Tragteil durch einen Deckel (5) des Druckbehälters (4) gebildet ist und dass der Druckbehälter (4) und der Kompressor (1) je mit im wesentlichen vertikaler Längsachse (B) bzw. vertikaler Antriebswelle (2) angeordnet und in einem sie umgebenden, zur Luftführung geeigneten Gehäuse (46) untergebracht sind, welches am unteren Ende mit einer Eintrittsöffnung (50) und am oberen Ende mit einer Austrittsöffnung (52) für Kühlluft versehen ist und welches zumindest mit dem Druckbehälter (4) einen von der Kühlluft durchströmbaren, gegen den Kompressor (1) und die Austrittsöffnung (52) hin offenen, ringförmigen Kanal (51) begrenzt.

6. Einrichtung nach Anspruch 5, dadurch gekennzeichnet, dass im Bereich der Eintrittsöffnung (50) ein Gebläse (36) mit einem um eine vertikale Achse antreibbaren Laufrad angeordnet ist, und dass im Bereich des Deckels (5) des Druckbehälters (4) Führungsmittel zum Umlenken der den Druckbehälter (4) umströmenden Kühlluft gegen die an den Deckel (5) anschliessende Gehäusepartie (1a) des Kompressors (1) gestatten.

7. Einrichtung nach Anspruch 6, dadurch gekennzeichnet, dass das Gehäuse (46) mit einer in einem axialen Abstand vom Deckel (5) des Druckbehälters (4) angeordneten, dessen äussere Randpartie überdeckenden ringscheibenartigen Prallplatte (77) ausgeführt ist, und dass als Führungsmittel für die Kühlluft leitschaufelartige Führungselemente vorgesehen sind.

8. Einrichtung nach Anspruch 7, dadurch gekennzeichnet, dass die Führungselemente durch am Deckel (5) ausgebildete, aus seinem Umfangsbereich gegen die Durchtrittsöffnung (19) hin verlaufende, z.B. evolventenförmig gekrümmte Kühlrippen (78) gebildet sind.

9. Einrichtung nach einem der Ansprüche 5 bis 8, dadurch gekennzeichnet, dass das den Druckbehälter (4) und den Kompressor (1) umgebende Gehäuse (46) innerhalb eines äusseren Gehäuses (85) angeordnet ist, welches eine Eintrittsöffnung (91) und eine Austrittsöffnung (92) für die Kühlluft enthält und welches mit dem inneren Gehäuse zwei durch Trennwände (88) voneinander getrennte, von der Kühlluft nacheinander durchströmbare Teilräume (89 und 90) begrenzt, von denen der eine (89) die beiden Eintrittsöffnungen (50 und 91) und der andere (96) die beiden Austrittsöffnungen (52 und 92) der Gehäuse (46 und 85) verbindet.

10. Einrichtung nach Anspruch 9, dadurch gekennzeichnet, dass die Steuereinrichtung (32) zwischen dem inneren Gehäuse (46) und dem äusseren Gehäuse (85) angeordnet ist.

11. Einrichtung nach einem der vorangehenden Ansprüche, mit einem mit der Druckseite des Kompressors (1) verbundenen, auf einen vorbestimmten Maximaldruck des Gasbrennstoffes einstellbaren Druckbegrenzungsventil (25), dadurch gekennzeichnet, dass das Druckbegrenzungsventil (25) im Gehäuse des Kompressors (1) angeordnet und an einen die Druckseite und die Saugseite des Kompressors (1) verbindenden Kanal (10b) angeschlossen ist.

## Claims

1. An appliance for refuelling a gas fuel tank (13), having a compressor (1) which can be driven via an electric motor (3), the suction side of which can be connected via a suction line (7) provided with an inlet valve to a source of the gas fuel, more especially a natural gas line (8), and the pressure side of which can be connected to a supply line (12), which can be coupled with the gas fuel tank (13) to be refuelled, and is connected to an outlet line (18) leading out of the pressurised tank (4) via control and monitoring components, which include a relief valve disposed in a pressure chamber of a pressurised tank (4) and a safety valve (20), which can be set at a predetermined opening pressure,
**characterised in that** the suction side of the compressor (1) and the suction line (7) are connected to the pressure chamber of the pressurised tank (4) containing the relief valve and the safety valve (20),
**in that** the outlet line (18) is connected via the safety valve (20) to this pressure chamber,
**and in that** a part of the pressure chamber (4) is constructed as a load-bearing part for a housing part (1a) of the compressor (1) which can be mounted thereon.

2. An appliance according to Claim 1,
**characterised in that** the load-bearing part of the pressurised tank (4) has an aperture (19) which can be sealed with respect to the housing part (1a) of the compressor (1),
**and in that** the motor (3) is disposed on the side of the load-bearing part remote from the compressor (1) and can be coupled to the compressor (1) via a drive shaft (2) penetrating this aperture (19).

3. An appliance according to Claim 2,
**characterised in that** the compressor (1) is disposed on the outside of the load-bearing part of the pressurised tank (4),
**in that** the stator (64) of the motor (3) is fixed to the inside of this load-bearing part,
**and in that** the rotor (65) of the motor (3) is connected to the drive shaft (2) of the compressor (1) to form a mounting unit which can be inserted through aperture (19) into the stator (64).

4. An appliance according to one of the preceding Claims, having control and monitoring components, which are connected via electric lines (30, 31, 33, 34, 40, 41) to a control mechanism (32),
**characterised in that** the control mechanism (32) is disposed outside the pressurized tank (34),
**and in that** the load-bearing part of the pressurised tank (4) is designed with connections (67, 68, 70 and 71) for the suction line (7), the outlet line (18) and a relief line (10) leading to the relief valve and also for the electrical lines (30, 31, 33, 34, 40, 41).

5. An appliance according to one of the preceding Claims, having a substantially cylindrical pressurized tank (4),
**characterised in that** the load-bearing part is formed by a cover (5) of the pressurized tank (4)
**and in that** the pressurized tank (4) and the compressor (1) are disposed with a substantially vertical longitudinal axis (B) or vertical drive shaft (2) respectively and are lodged in a housing (46) surrounding them which is suitable for air conduction, and which is provided with an inlet aperture (50) at the lower end and with an outlet aperture (52) for cooling air at the upper end and which, at least with the pressurised tank (4), limits an annular duct (51), through which the cooling air flows and which is open towards the compressor (1) and the outlet aperture (52).

6. An appliance according to Claim 5,
**characterised in that** in the region of the inlet aperture (50) a fan (36) with an impeller which can be driven around a vertical axis is disposed,
**and in that** in the region of the cover (5) of the pressurised tank (4) guide means are permitted to deflect the cooling air flowing around the pressurised tank (4) towards the housing part (1a) of the compressor (1) connected to the cover (5).

7. An appliance according to Claim 6,
**characterised in that** the housing (46) is designed with a deflector plate (77) like an annular disc, which is disposed at an axial distance from the cover (5) of the pressurised tank (4) and which covers its outer edge part,
**and in that** guide components similar to guide blades are provided as guide means for the cooling air.

8. An appliance according to Claim 7,
**characterised in that** the guide components are formed by cooling fins (78) which are constructed on the cover (5) and extend from its peripheral region towards aperture (19), and which are involutely curved, for example.

9. An appliance according to one of Claims 5 to 8,
**characterised in that** the housing (46) surrounding the pressurised tank (4) and the compressor (1) is disposed inside an outer housing (85), which contains an inlet aperture (91) and an outlet aperture (92) for the cooling air and which with the inner housing limits two partial chambers (89 and 90) separated by partitions (88) and through which cooling air can successively flow, one of which (89) connects the two inlet apertures (50 and 91) and the other of which (96) connects the two outlet apertures (52 and 92) of the housings (46 and 85).

10. An appliance according to Claim 9,
**characterised in that** the control mechanism (32) is disposed between the inner housing (46) and the outer housing (85).

11. An appliance according to one of the preceding Claims, having a pressure control valve (25) which is connected to the pressure side of the compressor (1) and can be set at a predetermined maximum pressure of the gas fuel,
**characterised in that** the pressure control valve (25) is disposed in the housing of the compressor (1) and is connected to a duct (10b) connecting the pressure side and the suction side of the compressor (1).

## Revendications

1. Système de remplissage d'un réservoir de combustible gazeux (13), comprenant un compresseur (1) qui est entraîné par un moteur électrique (3), dont le côté aspiration peut être relié, par une conduite d'aspiration (7) munie d'une valve d'admission, à une source de combustible gazeux, en particulier à une conduite de gaz naturel (8), et dont le côté refoulement peut être relié à une conduite d'alimentation (12) pouvant être accouplée au réservoir de combustible gazeux (13) à remplir et est en communication, par l'intermédiaire d'éléments de commande et de surveillance comprenant une valve de décharge implantée dans une chambre de pression d'un réservoir sous pression (4) et une valve de sécurité (20) réglable à une pression d'ouverture prédéterminée, avec une conduite d'évacuation (18) qui part du réservoir sous pression (4), caractérisé en ce que le côté aspiration du compresseur (1) et la conduite d'aspiration (7) sont reliés à la chambre de pression du réservoir sous pression (4), ladite chambre de pression contenant la valve de décharge et la valve de sécurité (20), en ce que la conduite d'évacuation (18) est reliée à cette chambre de pression par l'intermédiaire de la valve de sécurité (20), et en ce qu'une partie du réservoir sous pression (4) est conçue sous la forme d'une partie porteuse pour une partie de carter (1a) du compresseur (1) pouvant y être montée.

2. Système selon la revendication 1, caractérisé en ce que la partie porteuse du réservoir sous pression (4) comporte une ouverture de sortie (19) qui peut être rendu étanche par rapport à la partie de carter (1a) du compresseur (1), et en ce que le moteur (3) est disposé sur le côté de la partie porteuse opposé au compresseur (1) et peut être accouplé au compresseur (1) par l'intermédiaire d'un arbre d'entraînement (2) qui traverse cette ouverture de sortie (19).

3. Système selon la revendication 2, caractérisé en ce que le compresseur (1) est disposé sur le côté extérieur de la partie porteuse du réservoir sous pression (4), en ce que le stator (64) du moteur (3) est fixé au côté intérieur de cette partie porteuse, et en ce que le rotor (65) du moteur (3) est relié à l'arbre d'entraînement (2) du compresseur (1) pour former une unité de montage pouvant être introduite dans le stator (64) à travers l'ouverture de passage (19).

4. Système selon l'une des revendications précédentes, comprenant des éléments de commande et de surveillance reliés à un dispositif de commande (32) par des lignes électriques (30, 31, 33, 34, 40, 41), caractérisé en ce que le dispositif de commande (32) est disposé à l'extérieur du réservoir sous pression (4), et en ce que la partie porteuse du réservoir sous pression (4) comporte des raccords (67, 68, 70 et 71) pour la conduite d'aspiration (7), pour la conduite d'évacuation (18) et pour une conduite de décharge (10) conduisant à la valve de décharge, ainsi que pour les lignes électriques (30, 31, 33, 34, 40, 41).

5. Système selon l'une des revendications précédentes, comprenant un réservoir sous pression (4) de forme sensiblement cylindrique, caractérisé en ce que la partie porteuse est formée par un couvercle (5) du réservoir sous pression (4), et en ce que le réservoir sous pression (4) et le compresseur (1) sont disposés avec un axe longitudinal (B) sensiblement vertical et, respectivement, avec un arbre d'entraînement (2) vertical et sont logés dans un carter (46) qui les entoure, qui convient à l'alimentation en air, qui est muni, à l'extrémité inférieure, d'une ouverture d'entrée (50) et, à l'extrémité supérieure, d'une ouverture de sortie (52) pour l'air de refroidissement, et qui délimite, au moins avec le réservoir sous pression (4), un canal annulaire (51) qui peut être parcouru par l'air de refroidissement, et qui est ouvert en direction du compresseur (1) et de l'ouverture de sortie (52).

6. Système selon la revendication 5, caractérisé en ce que, dans la zone de l'ouverture d'entrée (50), est disposée une soufflante (36) munie d'une roue mobile pouvant être entraînée autour d'un axe vertical, et en ce que, dans la zone du couvercle (5) du réservoir sous pression (4), des moyens de guidage permettent de dévier l'air de refroidissement, qui circule autour du réservoir sous pression (4), en direction de la partie de carter (1a) qui fait suite au couvercle (5).

7. Système selon la revendication 6, caractérisé en ce que le carter (46) comporte une plaque déflectrice annulaire (77) qui est disposée à une distance axiale du couvercle (5) du réservoir sous pression (4) et qui en recouvre la partie extérieure de bord, et en ce que les moyens de guidage prévus pour l'air de refroidissement sont des éléments de guidage en forme d'aubes directrices.

8. Système selon la revendication 7, caractérisé en ce que les éléments de guidage sont formés par des ailettes de refroidissement (78), par exemple à courbure en développante, qui sont disposées sur le couvercle (5) et qui partent de sa zone périphérique en direction de l'ouverture de passage (19).

9. Système selon l'une des revendications 5 à 8, caractérisé en ce que le carter (46) entourant le réservoir sous pression (4) et le compresseur (1) est disposé à l'intérieur d'un carter extérieur (85) qui comporte une ouverture d'entrée (91) et une ouverture de sortie (92) pour l'air de refroidissement et qui délimite, avec le carter intérieur, deux chambres partielles (89 et 90) qui sont séparées l'une de l'autre par des cloisons (88) et peuvent être parcourues successivement par l'air de refroidissement et dont une (89) relie les deux ouvertures d'entrée (50 et 91) et l'autre (96) relie les deux ouvertures de sortie (52 et 92) des carters (46 et 85).

10. Système selon la revendication 9, caractérisé en ce que le dispositif de commande (32) est disposé entre le carter intérieur (46) et le carter extérieur (85).

11. Système selon l'une des revendications précédentes, comprenant une valve de limitation de pression (25) reliée au côté refoulement du compresseur (1) et réglée à une pression maximale prédéterminée du combustible gazeux, caractérisé en ce que la valve de limitation de pression (25) est disposée dans le carter du compresseur (1) et est reliée à un canal (10b) reliant le côté refoulement et le côté aspiration du compresseur (1).
